# DEMANDE DE BREVET EUROPEEN

(11) **EP 2 374 698 A1**
(43) Date de publication de la demande: **12.10.2011**
(21) Numéro de dépôt: 11157254.1
(22) Date de dépôt: 08.03.2011
(51) Int. Cl.: B62D 31/00, B60J 5/02, B60K 37/00

(54) **Véhicule à faible encombrement, destiné notamment à la location en libre-service**

(30) Priorité: 06.04.2010 FR 1052554
(71) Demandeur: Akka Ingenierie Produit, 92300 Levallois-Perret (FR)
(72) Inventeur: Ricci, Maurice, 69002, LYON (FR); Quintin, Thomas, 92410, VILLE D'AVRAY (FR); Julien, Jérôme, 75014, PARIS (FR)
(74) Mandataire: Gaillarde, Frédéric F. Ch.

(57) **Abrégé**

Véhicule (1) à deux places et au moins trois roues dont deux à l'avant (3), comportant :
- une ouverture d'accès en façade avant, et un ouvrant de façade avant associé (17),
- une planche de bord (35) déportée latéralement sur un côté de l'habitacle, et
- un ensemble de conduite (29) comprenant notamment un organe de direction (31), monté sur cette planche de bord (35),
remarquable en ce que ladite planche de bord (35) présente une forme sensiblement conique, la pointe (37) du cône étant située vers le bas, de manière à faciliter le passage des jambes d'un conducteur (39) lorsque ce dernier s'installe à l'intérieur du véhicule.

## Description

La présente invention se rapporte à un véhicule à faible encombrement, destiné notamment à la location en libre-service.

Ces dernière années, de nombreux modèles de véhicules de petite taille ont vu le jour: ces véhicules, à usage essentiellement urbain, tels que la Smart ®, offrent une grande facilité de stationnement ainsi qu'une excellente maniabilité dans la circulation en ville.

On a notamment vu apparaître des petits véhicules comportant une ouverture d'accès en façade avant, permettant d'accéder à l'intérieur du véhicule par l'avant de celui-ci : aucun espace de débattement latéral n'est nécessaire pour accéder dans l'habitacle, de sorte que ce véhicule peut être rangé côte à côte d'autres véhicules, en étant séparé de ces derniers par de très faibles espaces.

Ceci rend le véhicule particulièrement approprié au rangement en épi notamment pour la location en libre-service, le parc constitué par des véhicules ainsi rangés occupant une emprise au sol relativement faible : ceci permet d'envisager d'installer des zones de stationnement de tels véhicules dans un environnement urbain où l'espace est en général fortement contraint.

De plus, on notera que l'accès par l'avant du véhicule rend ce dernier particulièrement adapté au stationnement perpendiculairement aux trottoirs, ce qui permet de garer son véhicule dans des emplacements de dimensions très réduites.

La présente invention a notamment pour but de faciliter l'accès d'un conducteur à l'intérieur de l'habitacle d'un tel véhicule à ouverture de façade avant.

On atteint ce but de l'invention avec un véhicule à deux places et au moins trois roues dont deux à l'avant, comportant :
- une ouverture d'accès en façade avant, et un ouvrant de façade avant associé,
- une planche de bord déportée latéralement sur un côté de l'habitacle, et
- un ensemble de conduite comprenant notamment un organe de direction, monté sur cette planche de bord,
   remarquable en ce que ladite planche de bord présente une forme sensiblement conique, la pointe du cône étant située vers le bas, de manière à faciliter le passage des jambes d'un conducteur lorsque ce dernier s'installe à l'intérieur du véhicule.

Cette configuration permet aux passagers d'accéder aisément à leurs sièges en rentrant par l'avant du véhicule.

Suivant d'autres caractéristiques optionnelles du véhicule selon l'invention :
- le châssis du véhicule définit une marche située à l'avant de l'habitacle, en dessous du niveau du plancher de cet habitacle : cette marche facilite l'accès à l'intérieur de l'habitacle ;
- le châssis du véhicule comporte une superstructure comprenant un arceau situé à l'arrière des sièges, l'ouvrant étant articulé sur la partie supérieure de cet arceau : cet agencement fournit une articulation simple et robuste de l'ouvrant ;
- ladite superstructure comprend des profilés latéraux disposés en pente descendante dudit arceau vers l'avant du châssis : ces profilés inclinés permettent de protéger les passagers vis-à-vis des chocs latéraux, tout en autorisant une bonne visibilité latérale ;
- ladite superstructure comporte des renforts latéraux disposés sous lesdits profilés latéraux : ces renforts latéraux améliorent la protection des passagers vis-à-vis des chocs latéraux ;
- ledit ensemble de conduite est monté réglable notamment en hauteur sur ladite planche de bord : cette capacité de réglage permet d'adapter la configuration du véhicule aux différentes conformations physiques des conducteurs ;
- les moyens de réglage dudit ensemble de conduite sont du type à glissière et à coulisseau : ces moyens de réglage sont d'une conception simple et peu coûteuse ;
- ledit organe de direction comprend un volant à liaison non mécanique avec les roues directrices du véhicule, connecté à un moteur de retour de force : cette liaison non mécanique, souvent désignée par « drive-by-wire » (c'est-à-dire liaison électrique), est particulièrement appropriée au cas d'espèce, puisqu'elle permet de s'affranchir d'une colonne de direction, et ainsi de maintenir dégagé l'espace d'accès aux sièges du véhicule ;
- ledit organe de direction comprend des commandes d'accélération et de freinage, et ledit véhicule est dépourvu de pédalier : l'absence d'un tel pédalier facilite l'accès du conducteur à l'intérieur de l'habitacle, par l'avant du véhicule ;
- les sièges dudit véhicule sont fixes, c'est-à-dire non réglables : ceci permet de s'affranchir de mécanismes de réglage des sièges, et ainsi de gagner en poids ; le réglage en fonction des différentes conformations de conducteurs s'effectue avec l'ensemble de conduite ;
- ledit ouvrant comporte une vitre avant en verre, et des vitres latérales en matière plastique transparente : ces vitres en matière plastique permettent de gagner en poids ;
- lesdites vitres latérales comportent des parties ouvrantes par coulissement : ceci permet de s'affranchir de systèmes complexes de manoeuvre des vitres, et donc de gagner en poids ;
- la carrosserie dudit véhicule, et en particulier dudit ouvrant, est formée en matière plastique : là encore, le recours à des matières plastiques permet de gagner en poids.

D'autres caractéristiques et avantages de la présente invention apparaîtront à la lumière de la description qui va suivre, et à l'examen des figures ci-annexées dans lesquelles :
- les figures 1 à 3 représentent, en vue respectivement de face, de dessus et en perspective, un véhicule selon l'invention,
- la figure 4 représente, en perspective, le châssis de ce véhicule,
- la figure 5 représente, en perspective, la carrosserie et le châssis de ce véhicule, lorsque son ouvrant se trouve en position ouverte,
- la figure 6 est une vue analogue à celle de la figure 1, à la différence qu'une partie de l'ouvrant a été ôté, permettant de voir l'intérieur du véhicule,
- la figure 7 est une vue analogue à celle de la figure 6, un conducteur étant de plus représenté en position assise,
- la figure 8 est une vue schématique, en coupe longitudinale, du véhicule selon l'invention, dans lequel se trouve un conducteur, trois conformations différentes de conducteur et de réglage de l'ensemble de conduite associée ayant été représentées,
- la figure 9 est une vue en perspective du mécanisme de réglage en différentes positions de l'ensemble de conduite.

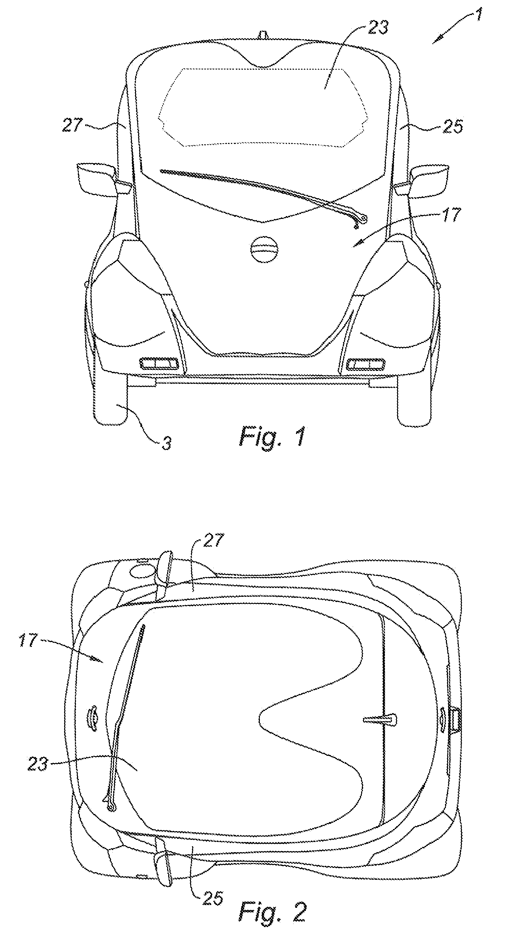

Comme on peut le voir sur les figures 1 à 3, le véhicule 1 selon l'invention est un véhicule de petites dimensions, sa longueur pouvant typiquement être de l'ordre de 2 m.

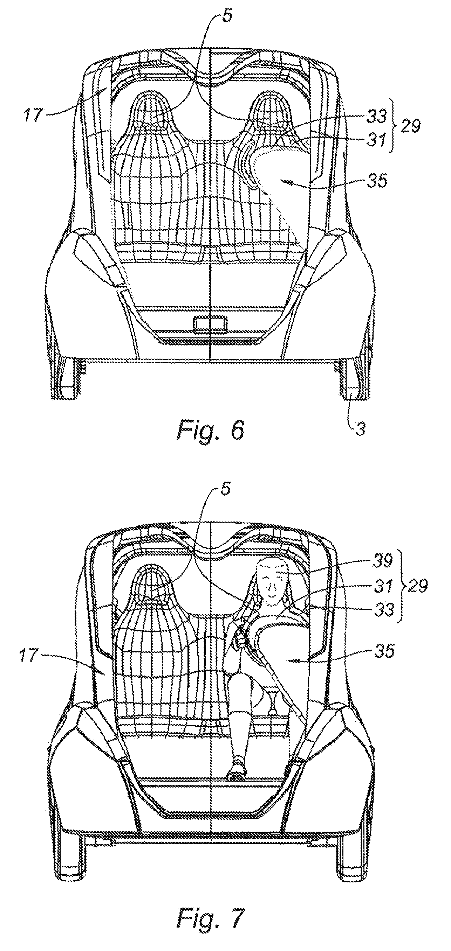

Ce véhicule comporte quatre roues 3, et deux sièges 5, visibles sur les figures 6 à 8.

Ce véhicule est de préférence à propulsion électrique, et son poids hors accumulateur électrique peut être typiquement de l'ordre de 350 kg.

L'accumulateur électrique, dont le poids peut être de l'ordre de 90 kg, est conçu pour fournir une autonomie de l'ordre de 80 kms.

Ce véhicule pouvant donc accueillir un conducteur et un passager, est destiné notamment à l'utilisation en ville, et plus particulièrement à la location en libre-service.

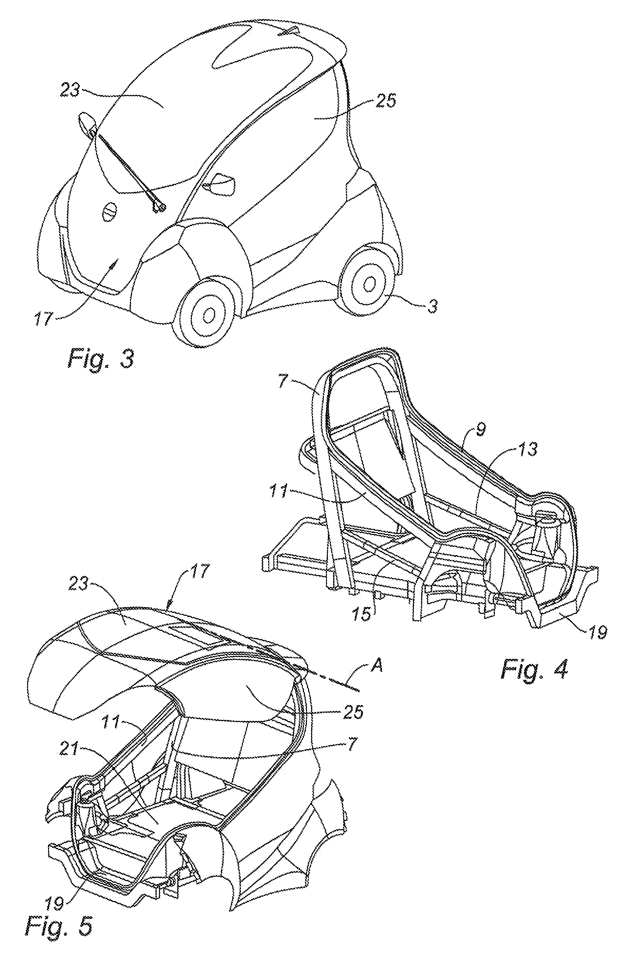

Comme cela est visible notamment à la figure 4, le châssis de ce véhicule, qui est formé de préférence essentiellement en aluminium afin d'obtenir un bon compromis poids/résistance, comporte un arceau à partir duquel s'étendent deux profilés latéraux 9, 11, ces profilés étant disposés en pente descendante de l'arceau 7 à l'avant du châssis du véhicule.

Sous ces deux profilés 9, 11 se trouvent des barres de renfort latérales 13, 15.

Les dossiers des sièges 5 sont destinés à être positionnés sensiblement dans le plan défini par l'arceau 7.

Comme cela est visible notamment à la figure 5, le véhicule 1 comporte un ouvrant 17 articulé à la partie supérieure de l'arceau 7 autour d'un axe A sensiblement transversal à la direction d'avancement du véhicule.

Cet ouvrant, qui en position fermée visible notamment à la figure 3, vient bord à bord avec les profilés latéraux 9, 11, permet un accès aux sièges 5 par l'avant du véhicule.

Pour faciliter cet accès, le châssis du véhicule 1 comporte, dans sa partie avant, une partie surbaissée19, située en dessous du niveau du plancher 21 du véhicule.

Cette partie surbaissée 19 forme une marche d'entrée à l'intérieur du véhicule par la face avant de celui-ci.

De préférence, la vitre avant 23 de l'ouvrant 17 est formée en verre, pouvant présenter une épaisseur comprise entre 3 et 4 mm, et les vitres latérales 25, 27 de l'ouvrant 17 sont de préférence formées en matière plastique transparente, telle que du polymétacrylate ou du polycarbonate.

Des ouvertures de fenêtres coulissantes associées peuvent être envisagées dans les vitres latérales 25, 27, de manière à permettre au conducteur et/ou au passager de passer son bras pour accéder par exemple à des bornes de péage ou de parking.

Dans le souci d'abaisser le poids de l'ensemble du véhicule, les parties non transparentes de la carrosserie tant de l'ouvrant 17 que du reste de ce véhicule sont de préférence formées en plaques de matière plastique telle que de l'ABS, rapportées sur l'ouvrant et sur le châssis du véhicule.

Les sièges 5 (voir figures 6 à 8) sont de préférence non réglables, de manière à éviter d'alourdir le véhicule avec des systèmes complexes de réglage de position.

Pour faciliter l'accès du conducteur à son poste de conduite, l'ensemble de conduite 29, comprenant un volant de direction 31 et un tableau de bord 33, est monté sur une planche de bord 35 qui est elle-même fixée latéralement sur la partie gauche du châssis.

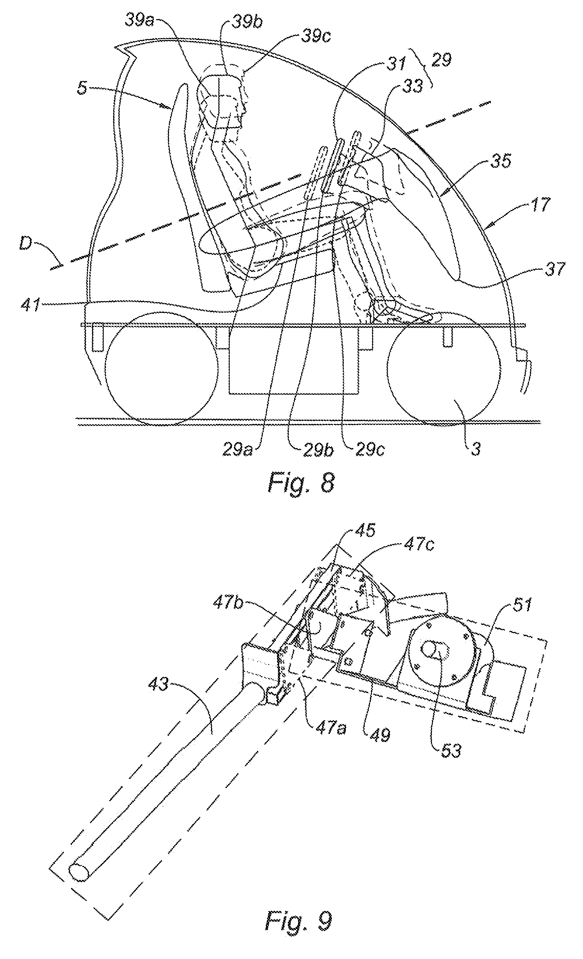

De préférence, comme cela est visible notamment sur les figures 6 et 7, la planche de bord 35 présente une forme sensiblement conique, la pointe 37 du cône (voir figure 8) étant située vers le bas, de manière à faciliter le passage des jambes du conducteur 39 (voir figure 7) lorsque ce dernier s'installe à l'intérieur du véhicule.

La position des sièges 5 n'étant pas réglable, il convient de prévoir un système permettant de régler l'ensemble de conduite 29 dans différentes positions 29a, 29b, 29c (voir figure 8), correspondant à différentes conformations respectives du conducteur, 39a, 39b, 39c.

Plus précisément, comme cela est visible sur la figure 8, des moyens de réglage de la position de l'ensemble de conduite 29 sont adaptés pour permettre un déplacement selon une direction oblique D sensiblement parallèle à l'assise 41 du siège du conducteur 5.

Plus précisément encore, en se reportant à la figure 9, on peut voir que le mécanisme de réglage de la position de l'ensemble de conduite 29 peut comprendre typiquement une barre de support 43 solidaire du châssis du véhicule 1, sur laquelle est fixée une glissière 45, à l'intérieur de laquelle un coulisseau 47 est susceptible de coulisser entre des positions 47a, 47b, 47c correspondant respectivement aux positions 29a, 29b, 29c de l'ensemble de conduite.

Au coulisseau 47 est reliée une platine de support 49 sur laquelle est monté un moteur électrique de retour d'effort 51, dont l'arbre de sortie 53 est destiné à être fixé au volant 31.

On comprend ici que le choix du mécanisme de direction soit porté de préférence sur un système du type sans arbre de direction, ou « drive-by-wire », selon l'expression consacrée par la littérature à ce type de direction.

En d'autres termes, il s'agit d'une direction à transmission purement électrique, et non mécanique, le moteur de retour d'effort 51 permettant de recréer pour le conducteur 39 la sensation d'une résistance propre à un volant relié à un arbre de direction classique.

La commande des roues de direction sans arbre de direction est particulièrement appropriée au cas d'espèce, car elle permet de supprimer l'encombrement inhérent à un arbre de direction, et ainsi de dégager au maximum la zone d'accès du conducteur, et en particulier de prévoir une planche de bord 35 de forme sensiblement conique comme décrit ci-dessus.

Les avantages du véhicule selon l'invention résultent directement de la description qui précède.

L'accès par l'avant du véhicule est très nettement adapté aux situations dans lesquelles on souhaite occuper le minimum d'espace de stationnement, puisqu'aucun encombrement latéral d'ouverture de portière n'est à prévoir.

Le choix des matériaux (aluminium pour le châssis et matière plastique pour la carrosserie) permet d'obtenir un excellent compromis poids/résistance, ce qui rend ce véhicule tout à fait approprié à un mode de propulsion électrique avec accumulateur.

La structure particulière du châssis, avec son arceau 7 et ses profilés et renforts latéraux 9, 11 et 13, 15 permet d'obtenir une excellente rigidité du châssis, ainsi qu'une bonne protection des passagers, étant observé que l'orientation inclinée des profilés 9, 11 permet en outre de procurer une bonne visibilité latérale à ces passagers.

La partie surbaissée 19 du châssis facilite l'accès des occupants à l'intérieur du véhicule.

La planche de bord 35 déportée latéralement facilite considérablement l'accès du conducteur, dont le confort de conduite peut être optimisé grâce aux moyens de réglage de l'ensemble de conduite 29.

A noter que la direction du type « drive-by-wire » permet, outre de réduire l'encombrement, d'alléger considérablement le véhicule, et ainsi d'augmenter son autonomie.

De préférence, on envisage que les commandes d'accélération et de freinage soient situées sur le volant 31, ce qui permet de s'affranchir de pédalier de commande, et contribue donc à faciliter l'accès du conducteur à l'intérieur de l'habitacle du véhicule.

Bien entendu, la présente invention n'est nullement limitée au mode de réalisation décrit et représenté, fourni à titre de simple exemple.

## Revendications

1. Véhicule (1) à deux places et au moins trois roues dont deux à l'avant (3), comportant :
- une ouverture d'accès en façade avant, et un ouvrant de façade avant associé (17),
- une planche de bord (35) déportée latéralement sur un côté de l'habitacle, et
- un ensemble de conduite (29) comprenant notamment un organe de direction (31), monté sur cette planche de bord (35),
**caractérisé en ce que** ladite planche de bord (35) présente une forme sensiblement conique, la pointe (37) du cône étant située vers le bas, de manière à faciliter le passage des jambes d'un conducteur (39) lorsque ce dernier s'installe à l'intérieur du véhicule.

2. Véhicule (1) selon la revendication 1, **caractérisé en ce que** le châssis du véhicule définit une marche (19) située à l'avant de l'habitacle, en dessous du niveau du plancher (21 ) de cet habitacle.

3. Véhicule (1) selon l'une des revendications 1 ou 2, **caractérisé en ce que** le châssis du véhicule comporte une superstructure comprenant un arceau (7) situé à l'arrière des sièges (5), l'ouvrant (17) étant articulé sur la partie supérieure de cet arceau (7).

4. Véhicule (1) selon la revendication 3, **caractérisé en ce que** ladite superstructure comprend des profilés latéraux (9, 11) disposés en pente descendante dudit arceau (7) vers l'avant du châssis.

5. Véhicule (1) selon la revendication 4, **caractérisé en ce que** ladite superstructure comporte des renforts latéraux (13, 15) disposés sous lesdits profilés latéraux (9, 11 ).

6. Véhicule (1) selon l'une quelconque des revendications précédentes, **caractérisé en ce que** ledit ensemble de conduite (29) est monté réglable notamment en hauteur sur ladite planche de bord (35).

7. Véhicule (1) selon la revendication 6, **caractérisé en ce que** les moyens de réglage dudit ensemble de conduite (29) sont du type à glissière (45) et à coulisseau (47a, 47b, 47c).

8. Véhicule (1) selon l'une quelconque des revendications précédentes, **caractérisé en ce que** ledit organe de direction comprend un volant (31) à liaison non mécanique avec les roues directrices du véhicule, connecté à un moteur de retour de force (53).

9. Véhicule (1) selon l'une quelconque des revendications précédentes, **caractérisé en ce que** ledit organe de direction (31) comprend des commandes d'accélération et de freinage, et **en ce que** ledit véhicule est dépourvu de pédalier.

10. Véhicule (1) selon l'une quelconque des revendications précédentes, **caractérisé en ce que** les sièges (5) dudit véhicule sont fixes, c'est-à-dire non réglables.

11. Véhicule (1) selon l'une quelconque des revendications précédentes, **caractérisé en ce que** ledit ouvrant (17) comporte une vitre avant en verre, et des vitres latérales (25, 27) en matière plastique transparente.

12. Véhicule (1) selon la revendication 11, **caractérisé en ce que** lesdites vitres latérales (25, 27) comportent des parties ouvrantes par coulissement.

13. Véhicule (1 ) selon l'une quelconque des revendications précédentes, **caractérisé en ce que** la carrosserie dudit véhicule (1), et en particulier dudit ouvrant, est formée en matière plastique.
